# EUROPÄISCHE PATENTANMELDUNG

(11) **EP 2 213 842 A1**
(43) Veröffentlichungstag der Anmeldung: **04.08.2010**
(21) Anmeldenummer: 09001266.7
(22) Anmeldetag: 29.01.2009
(51) Int. Cl.: F01D 11/02, F16J 15/44, F16J 15/48

(54) **Hydrostatische Dichtungsanordnung für eine Dampfturbine**

(71) Anmelder: Siemens Aktiengesellschaft, 80333 München (DE)
(72) Erfinder: Homeier, Lars, Dr., 45481 Mülheim a.d. Ruhr (DE); Pieper, Norbert, 47178 Duisburg (DE); Sievert, Roland, Dr., 45147 Essen (DE); Wallis, Anne, Dr., 45470 Mülheim a.d. Ruhr (DE)

(57) **Zusammenfassung**

Ein Dichtsystem (1), insbesondere für eine Dampfturbine (20), mit einem ersten Druckraum (2) und einem zweiten Druckraum (4), die über einen Zwischenraum (6) verbunden sind, wobei der Zwischenraum (6) über einen Führungskanal (10) mit einem dritten Druckraum (12) verbunden ist, wobei in dem Führungskanal (10) ein Dichtsegment angeordnet ist, welches entlang des Führungskanals (10) beweglich ist und sich in den Zwischenraum erstreckt, soll unter Erhaltung eines besonders hohen Wirkungsgrades im Dauerbetrieb eine besonders geringe Reparaturbedürftigkeit der Dampfturbine auch nach Betriebszuständen wie beispielsweise einer Schnellabschaltung ermöglichen. Dazu ist zwischen dem ersten und dem dritten Druckraum (2, 12) ein erster Verbindungskanal (16) angeordnet und zwischen dem zweiten und dem dritten Druckraum (4, 12) ein zweiter Verbindungskanal (18) angeordnet, wobei die Mindestquerschnittsfläche des ersten Verbindungskanals (16) in jedem Betriebszustand größer ist als die Mindestquerschnittsfläche des zweiten Verbindungskanals (18).

## Beschreibung

Die Erfindung betrifft ein Dichtsystem, insbesondere für eine Dampfturbine, mit einem ersten Druckraum und einem zweiten Druckraum, die über einen Zwischenraum verbunden sind, wobei der Zwischenraum über einen Verbindungskanal mit einem dritten Druckraum verbunden ist, wobei in dem Führungskanal ein Dichtsegment angeordnet ist, welches entlang des Führungskanals beweglich ist und sich in den Zwischenraum erstreckt. Sie betrifft weiter eine Dampfturbine und eine Gas- und Dampfturbinenanlage.

In einer Dampfturbine wird die Enthalpie von in einem Dampferzeuger erzeugtem Dampf zur Erzeugung mechanischer Energie genutzt. Dazu wird Heißdampf über eine Anzahl von Leit- und Laufschaufeln geleitet, wobei die Leitschaufeln am Stator, d. h. dem unbeweglichen Gehäuse der Turbine, befestigt sind und die Laufschaufeln am Rotor, d. h. der rotierenden Welle der Turbine.

Heutige Dampfturbinen umfassen dabei oftmals mehrere Druckteile, beispielsweise einen Hochdruckteil sowie zwei oder drei Niederdruckteile, die auch in separaten Gehäusen untergebracht sein können. Um die mit diesem erhitztem Dampf beaufschlagten Bauteile der Hochdruckturbine vor Beschädigungen zu schützen, kann Kühldampf aus einer externen Quelle zugeführt werden und beispielsweise in den Bereich zwischen Welle und Gehäuse eingebracht werden.

Um dabei die mit Kühldampf beaufschlagten Bereiche von den mit Heißdampf beaufschlagten Bereichen abzutrennen, sind entlang der Welle der Turbine, beispielsweise zwischen einem ersten und einem zweiten Druckraum Dichtsegmente vorgesehen. Diese sind geeignet, um einen kontrollierten Druckabbau entlang der Turbinenwelle zu bewerkstelligen. Dabei sind diese Dichtsegmente üblicherweise in radial ausgerichteten Führungskanälen angeordnet und in radialer Richtung beweglich. Dadurch kann das Dichtsegment im Falle eines ungewollten Anstreifens im Dichtungsbereich beispielsweise bei evakuierter Turbine im Drehbetrieb in radialer Richtung in einen auf der der Turbinenwelle abgewandten Seite angeordneten dritten Druckraum ausweichen. Somit wird eine Schädigung von Welle und Gehäuse verhindert.

Im Falle einer Schnellabschaltung der Hochdruckturbine, d. h. bei plötzlichem Verlust des einströmenden Heißdampfes wird der vorher nur mit Heißdampf beaufschlagte, an das Dichtsegment angrenzende erste Druckraum in kürzester Zeit entleert und dessen Druck sinkt vom hohen Einströmdruck auf einen deutlich geringeren Druck. Der mit Kühldampf beaufschlagte zweite Druckraum, welcher an das Dichtsegment angrenzt, ist jedoch durch die Dichtsegmente abgedichtet und somit bleibt der Druck hier länger auf hohem Niveau und es bildet sich zeitlich begrenzt eine unzulässig hohe Druckdifferenz über das Dichtsegment. Dadurch kann es zu Beschädigungen am Dichtsegment oder dessen Elementen kommen, was evtl. zu einem Ausfall der Hochdruckturbine führen könnte.

Der Erfindung liegt daher die Aufgabe zugrunde, ein Dichtsystem, insbesondere für eine Dampfturbine, anzugeben, welches unter Erhaltung eines besonders hohen Wirkungsgrades im Dauerbetrieb eine besonders geringe Reparaturbedürftigkeit der Dampfturbine auch nach Betriebszuständen wie beispielsweise einer Schnellabschaltung ermöglicht.

Diese Aufgabe wird erfindungsgemäß gelöst, indem zwischen dem ersten und dem dritten Druckraum ein erster Verbindungskanal angeordnet ist und zwischen dem zweiten und dem dritten Druckraum ein zweiter Verbindungskanal angeordnet ist, und wobei die Mindestquerschnittsfläche des ersten Verbindungskanals in jedem Betriebszustand größer ist als die Mindestquerschnittsfläche des zweiten Verbindungskanals.

Die Erfindung geht dabei von der Überlegung aus, dass im Falle einer Schnellabschaltung der Hochdruckturbine der im zweiten Druckraum befindliche Kühldampf nur über die Dichtsegmente an der Turbinenwelle entweichen kann. Daher wird eine Möglichkeit benötigt, um über das Dichtsegment innerhalb der Dampfturbine ein schnelleres Abfließen des Kühldampfes zu ermöglichen und somit die sehr hohen Druckdifferenzen zu vermeiden. Dies ist erreichbar, indem das Dichtsegment derart ausgelegt wird, dass im Falle einer Schnellabschaltung durch eine radiale Bewegung ein Ringspalt freigegeben wird, um einen schnelleren Druckausgleich entgegengesetzt zur im Betrieb vorliegenden Strömungsrichtung zu ermöglichen.

Dies ist erreichbar, indem entsprechende Verbindungskanäle zwischen den einzelnen Druckräumen des Dichtsystems angeordnet werden. Dabei kommen sowohl Verbindungskanäle in Betracht, die aufgrund von Fertigungstoleranzen beispielsweise als Spalte zwischen einzelnen Teilen des Dichtsystems bestehen, als auch gezielt eingebrachte Verbindungskanäle. Auch kann ein jeweiliger Verbindungskanal auch aus mehreren parallelen Kanälen bestehen. Diese sollten in ihrer Gesamtheit derart ausgelegt werden, dass die hydrostatische Kraftverteilung am Dichtsegment ein Öffnen des Dichtsegments im Falle einer Schnellabschaltung der Hochdruckturbine bewirkt. Dies ist erreichbar, indem die Mindestquerschnittsfläche, d. h. bei einer entlang des Verbindungskanals variierenden Querschnittsfläche die minimale Querschnittsfläche des ersten Verbindungskanals zwischen den nur mit Heißdampf beaufschlagten ersten Druckraum und dem hinter dem Dichtsegment befindlichen dritten Druckraum in jedem Betriebszustand größer ist als die Mindestquerschnittsfläche des zweiten Verbindungskanals zwischen dem mit Kühldampf beaufschlagten zweiten Druckraum und dem dritten Druckraum.

Damit ist der mögliche Dampffluss durch den ersten Verbindungskanal größer als der durch den zweiten Verbindungskanal. Dadurch sinkt im Falle einer Schnellabschaltung auch der Druck im dritten Druckraum, so dass das Dichtsegment sich aufgrund des höheren Drucks des Kühldampfes im Bereich der Welle radial von der Welle wegbewegt und somit den Zwischenraum freigibt, um einen schnelleren Druckausgleich entlang der Welle zu ermöglichen.

In vorteilhafter Ausgestaltung ist das Verhältnis und/oder die Absolutwerte der Mindestquerschnittsflächen dabei derart ausgelegt, dass dem dritten Druckraum, im Wesentlichen der Druck des ersten Druckraums, d. h. des mit Heißdampf beaufschlagten Druckraums, aufgeprägt wird. Durch eine derartige Auslegung der Mindestquerschnittsflächen ist dann gewährleistet, dass der Druck im dritten Druckraum im Wesentlichen dem des ersten Druckraumes entspricht und somit einerseits durch die hydrostatische Kraftverteilung während des Standardbetriebs eine Lage des Dichtsegmentes nahe der Turbinenwelle und somit eine gute Abdichtung vorliegt, während bei einer Schnellabschaltung ein schnelles Ausweichen des Dichtsegments durch einen schnellen Druckabfall im dritten Druckraum gewährleistet ist.

In weiterer vorteilhafter Ausgestaltung weist das Dichtsystem eine Anzahl von Dichtelementen auf. Derartige Dichtelemente wie z. B. Bürsten oder Dichtspitzen sollten dabei derart angeordnet sein, dass die hydrostatische Kraftverteilung, die ein radiales Öffnen der Dichtsegmente bewirkt, optimiert wird und somit die Anordnung der Dichtelemente die geforderte Bewegung des Dichtsegments unterstützt.

Vorteilhafterweise ist dabei die geometrische Form des Dichtsegments an die im Betrieb erforderliche hydrostatische Kraftverteilung angepasst. Dazu sollte das Dichtsegment beispielsweise asymmetrisch ausgeformt sein, um ein Kippen oder Verklemmen des Segmentes zu verhindern. Weiterhin können die Längen der Schenkel des Dichtsegments zur Optimierung der hydrostatischen Kraftverteilung am Segment benutzt werden. Je nach Auslegungsziel sollten dabei die Schenkel gleich oder verschieden lang gestaltet werden. Damit ist ein definierter statischer Zustand (kein Flattern oder Ähnliches) des Segments in der Gehäusenut für verschiedene Lastfälle zu erreichen.

Vorteilhafterweise umfasst das Dichtsystem eine Anzahl von Federn. Durch eine Anordnung von Federn am Dichtsegment lässt sich die Kraft, die zur Bewegung des Dichtsegmentes benötigt wird, beeinflussen und somit ist das Dichtsystem noch besser an die benötigten Betriebsparameter anpassbar.

Dabei ist die jeweilige Feder vorteilhafterweise derart ausgelegt, dass sich das Dichtsegment bei einer vorgegebenen hydrostatischen Krafteinwirkung aus einer Ruhelage bewegt. Damit wird über die Anordnung (Lage, Anzahl, Federsteifigkeit) der jeweiligen Feder neben einer radial eindeutig definierten Positionierung der Dichtelemente auch ein Losbrechmoment definiert, um die benötigte Kraft zum Öffnen des Dichtsegments einzustellen. Damit ist erreichbar, dass das Dichtsystem bei einer genau definierten Krafteinwirkung durch eine entsprechende Druckdifferenz bei einer Schnellabschaltung der Hochdruckturbine öffnet.

In vorteilhafter Ausgestaltung ist der erste und/oder der zweite Verbindungskanal gebohrt. Durch eine Bohrung lassen sich die Querschnitte und die Positionierung der Verbindungskanäle besonders präzise einstellen.

Vorteilhafterweise kommt ein derartiges Dichtsystem in einer Dampfturbine zum Einsatz. Dabei sind der erste und der zweite Druckraum des Dichtsystems vorteilhafterweise von einer Welle der Dampfturbine begrenzt, das Dichtsystem kommt also als Wellendichtung zur Abdichtung zweier axial voneinander beabstandeter Druckräume zum Einsatz.

In vorteilhafter Ausgestaltung ist eine derartige Dampfturbine Bestandteil einer Dampfturbinenanlage oder einer Gas- und Dampfturbinenanlage.

Die mit der Erfindung erzielten Vorteile bestehen insbesondere darin, dass durch eine größere Mindestquerschnittsfläche des ersten Verbindungskanals gegenüber der des zweiten Verbindungskanals des Dichtsystems ein besonders schneller Druckausgleich zwischen mit Heißdampf beaufschlagtem Druckraum und dem hinter dem Dichtsegment liegenden Druckraum erreicht wird, so dass das Dichtsegment bei Verlust des Einströmdruckes, d. h. bei einem Schnellschluss der Dampfturbine, sich radial nach außen bewegt und somit einen Druckausgleich entlang der Turbinenwelle ermöglicht. Dies führt zu einer adaptiven Entlastung, wodurch das Dichtsegment des Dichtsystems bei einer Schnellabschaltung der Hochdruckturbine unbeschädigt bleibt. Die konstruktive Auslegung der verschiedenen Elemente des Dichtsystems erlaubt eine Anpassung auf verschiedene Dampfzustände und führt weiterhin dazu, dass die Dichtfunktion des Dichtsegments auch nach einem Turbinenschnellschluss noch gegeben ist.

Ein Ausführungsbeispiel der Erfindung wird anhand einer Zeichnung näher erläutert. Darin zeigen:
- FIG 1: eine schematische Darstellung des Dichtsystems im Dauerbetriebszustand,
- FIG 2: eine schematische Darstellung des Dichtsystems bei einer Schnellabschaltung der Dampfturbine, und
- FIG 3: einen schematischen Halbschnitt durch eine Dampfturbine.

Gleiche Teile sind in allen Figuren mit denselben Bezugszeichen versehen.

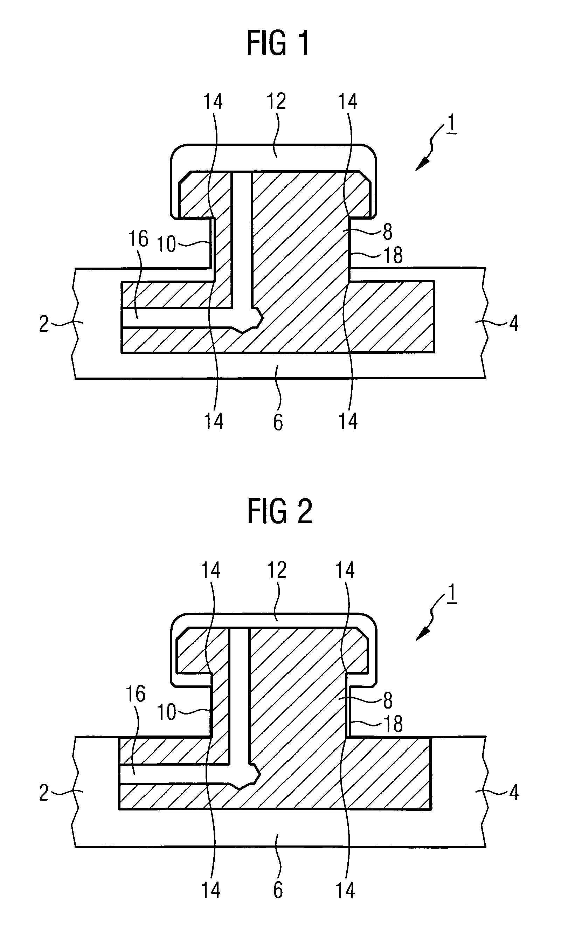

Das Dichtsystem 1 nach der FIG 1 umfasst einen ersten Druckraum 2 sowie einen zweiten Druckraum 4, welche über einen Zwischenraum 6 verbunden sind. Bei einer Anordnung eines derartigen Dichtsystems 1 in einer Dampfturbine ist der erste Druckraum 2 im Dauerbetrieb mit Heißdampf mit hohem Druck beaufschlagt, während der zweite Druckraum 4 mit einem geringeren Druck durch einströmenden Kühldampf beaufschlagt ist. Somit strömt Heißdampf durch den Zwischenraum 6 in kontrollierter, genau definierter Menge in den zweiten Druckraum 4 und das Dichtsegment 8 ist derart ausgelegt, dass es die vorbestimmte Menge an Heißdampf durch den Zwischenraum 6 passieren lässt.

Um eine radiale Beweglichkeit des Dichtsegments 8 zu gewährleisten, ist dieses mit einem vordefinierten Spiel in einem Führungskanal 10 angeordnet, welcher den Zwischenraum 6 mit einem dritten Druckraum 12 verbindet. Durch entsprechende Abkantungen 14 am Dichtelement 8 ist dessen Beweglichkeit in radialer Richtung in genau definierter Weise eingeschränkt.

Im Falle eines Druckverlustes im ersten Druckraum 2 sollte zur Vermeidung von Beschädigungen des Dichtsegments 8 ein Druckausgleich vom zweiten Druckraum 4 in den ersten Druckraum 2 ermöglicht werden. Dazu ist zwischen dem ersten Druckraum 2 und dem dritten Druckraum 12 nun ein erster Verbindungskanal 16 mittels einer Bohrung in das Dichtelement 8 eingebracht. Dieser kann auch durch andere maschinelle Fertigungsverfahren wie Fräsen oder Erodieren eingebracht sein.

Zwischen dem zweiten Druckraum 4 und dem dritten Druckraum 12 existiert ein zweiter Verbindungskanal 18 aufgrund des Spiels des Dichtsegments 8 im Führungskanal 10. Die Größe des zweiten Verbindungskanals 18 kann in verschiedenen Betriebszuständen variieren, da sich das Dichtsegment 8 je nach Druckzustand in den Druckräumen 2, 4 im Führungskanal 10 verschieben kann. Dabei ist der erste Verbindungskanal 16 jedoch so gebohrt, dass seine Mindestquerschnittsfläche, d. h. die Querschnittsfläche an der jeweils engsten Stelle in jedem Betriebszustand größer ist als die Mindestquerschnittsfläche des zweiten Verbindungskanals 18. Dies hat zur Folge, dass im Dauerbetriebszustand der dritte Druckraum 12 im Wesentlichen mit dem Druck des ersten Druckraums 2 beaufschlagt wird, d. h. mit dem hohen Druck des einströmenden Heißdampfs. Dadurch wird das Dichtsegment 8 in Richtung des Zwischenraumes 6 bewegt und dichtet den ersten Druckraum 2 und den zweiten Druckraum 4 gegeneinander ab, wobei gleichzeitig jedoch ein Durchströmen von Heißdampf aus dem ersten Druckraum 2 in den zweiten Druckraum 4 möglich bleibt.

Im Falle einer Schnellabschaltung der Dampfturbine, d. h. bei einem Druckverlust im ersten Druckraum 2 wird nun durch den höheren Querschnitt des ersten Verbindungskanals 16 auch der dritte Druckraum 12 mit dem vergleichsweise geringeren Druck beaufschlagt, während das Druckniveau im zweiten Druckraum 4 durch zuströmenden Kühldampf weit gehend erhalten bleibt. Dadurch ist nun der Druck im Zwischenraum 6 größer als im dritten Druckraum 12 und das Dichtsegment 8 wird - wie in FIG 2 gezeigt - in radialer Richtung in den dritten Druckraum 12 bewegt, so dass der Zwischenraum 6 freigegeben wird und ein Druckausgleich vom zweiten Druckraum 4 in den ersten Druckraum 2 erfolgen kann. Dadurch werden Beschädigungen des Dichtsystems 1 durch die hohe Druckdifferenz zwischen dem ersten Druckraum 2 und dem zweiten Druckraum 4 entgegen der Druckdifferenz im üblichen Lastfall verhindert und eine Beschädigung des Dichtsystems 1 nach einer Schnellabschaltung der Hochdruckturbine wird verhindert.

Das Dichtsystem 1 kann auch noch eine Anzahl von weiteren Dichtelementen aufweisen, die die Bewegung des Dichtsegments 8 entsprechend unterstützen können. Die geometrische Form des Dichtsegments 8 sollte dabei auch an die im Betrieb erforderliche hydrostatische Kraftverteilung angepasst sein, um beispielsweise ein Verkanten oder Abkippen des Dichtsegments 8 zu verhindern. Weiterhin kann eine Anzahl von Federn am Dichtsegment 8 vorgesehen sein, so dass ein vordefiniertes Losbrechmoment mittels einer entsprechenden Wahl der Anzahl, Größe und Stärke der Federn einstellbar ist.

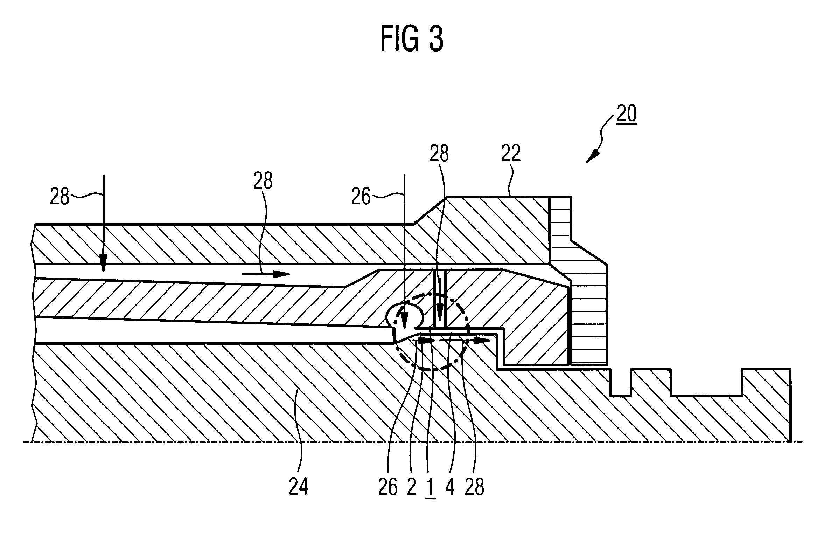

FIG 3 zeigt nun die Anordnung eines derartigen Dichtsystems 1 in einer Dampfturbine 20. Die Dampfturbine 20 umfasst ein Turbinengehäuse 22 sowie eine Turbinenwelle 24. Das Dichtsystem 1 ist hier angeordnet zwischen dem ersten Druckraum 2, der mit Heißdampf 26 beaufschlagt wird, und einem zweiten Druckraum 4, der mit Kühldampf 28 oder einer Mischung aus Kühldampf und Dampf aus der Turbine beaufschlagt wird. Durch die Anordnung eines derartigen Dichtsystems 1 in einer Dampfturbine 20 ist ein wesentlich sicherer Betrieb und eine geringere Reparaturanfälligkeit nach einer Schnellabschaltung der Dampfturbine 20 möglich.

## Patentansprüche

1. Dichtsystem (1),
insbesondere für eine Dampfturbine (20),
mit einem ersten Druckraum (2) und einem zweiten Druckraum (4), die über einen Zwischenraum (6) verbunden sind,
wobei der Zwischenraum (6) über einen Führungskanal (10) mit einem dritten Druckraum (12) verbunden ist,
wobei in dem Führungskanal (10) ein Dichtsegment (8) angeordnet ist, welches entlang des Führungskanals (10) beweglich ist und sich in den Zwischenraum erstreckt,
wobei zwischen dem ersten und dem dritten Druckraum (2, 12) ein erster Verbindungskanal (16) angeordnet ist und zwischen dem zweiten und dem dritten Druckraum (4, 12) ein zweiter Verbindungskanal (18) angeordnet ist, und
wobei die Mindestquerschnittsfläche des ersten Verbindungskanals (16) in jedem Betriebszustand größer ist als die Mindestquerschnittsfläche des zweiten Verbindungskanals (18).

2. Dichtsystem (1) nach Anspruch 1,
bei dem das Verhältnis und/oder die Absolutwerte der Mindestquerschnittsflächen derart ausgelegt sind, dass dem dritten Druckraum (12) im Wesentlichen der Druck des ersten Druckraums (2) aufgeprägt wird.

3. Dichtsystem (1) nach Anspruch 1 oder 2,
das eine Anzahl von Dichtelementen aufweist.

4. Dichtsystem (1) nach einem der Ansprüche 1 bis 3,
bei dem die geometrische Form des Dichtsegments (8) an die im Betrieb erforderliche hydrostatische Kraftverteilung angepasst ist.

5. Dichtsystem (1) nach einem der Ansprüche 1 bis 4,
das eine Anzahl von Federn umfasst.

6. Dichtsystem (1) nach Anspruch 5,
bei dem die jeweilige Feder derart ausgelegt ist, dass sich das Dichtsegment (8) bei einer vorgegebenen hydrostatischen Krafteinwirkung aus einer Ruhelage bewegt.

7. Dichtsystem (1) nach einem der Ansprüche 1 bis 6,
bei dem der erste und/oder der zweite Verbindungskanal (16, 18) gebohrt sind.

8. Dampfturbine (20) mit einem Dichtsystem (1) nach einem der Ansprüche 1 bis 7.

9. Dampfturbine (20) nach Anspruch 8,
bei dem der erste und der zweite Druckraum (4, 6) von einer Welle (24) der Dampfturbine (20) begrenzt sind.

10. Dampfturbinenanlage mit einer Dampfturbine (20) nach Anspruch 8 oder 9.

11. Gas- und Dampfturbinenanlage mit einer Dampfturbine (20) nach Anspruch 8 oder 9.
